# EUROPÄISCHE PATENTSCHRIFT

(11) **EP 1 051 639 B1**
(45) Veröffentlichungstag und Bekanntmachung des Hinweises auf die Patenterteilung: **29.08.2001**
(21) Anmeldenummer: 99911575.1
(22) Anmeldetag: 27.01.1999
(51) Int. Cl.: G01S 7/35, G01S 13/58

(54) **RADAR-SENSORVORRICHTUNG**
RADAR SENSOR DEVICE
DISPOSITIF DE DETECTION RADAR

(30) Priorität: 30.01.1998 DE 19803660
(43) Veröffentlichungstag der Anmeldung: 15.11.2000
(73) Patentinhaber: SIEMENS AKTIENGESELLSCHAFT, 80333 München (DE)
(72) Erfinder: KUNERT, Martin, D-93073 Neutraubling (DE); HEIDE, Patric, D-85579 Neubiberg (DE)
(86) Internationale Anmeldenummer: DE9900216
(87) Internationale Veröffentlichungsnummer: WO9939220

(56) Entgegenhaltungen:
- EP-A- 0 758 093
- DE-A- 19 538 309
- FR-A- 2 751 421
- US-A- 5 287 111

## Beschreibung

Die Erfindung betrifft eine Radar-Sensorvorrichtung zur Erfassung des Abstandes und/oder der Geschwindigkeit eines Objektes relativ zur Sensorvorrichtung.

Zum Hintergrund der Erfindung ist festzuhalten, daß die Radartechnik für den Einsatz in Kraftfahrzeugen und in der Industrie für eine berührungslose Erfassung von Objektdaten, wie Entfernung, Geschwindigkeit, Beschaffenheit oder Anwesenheit besonders geeignet ist. Die Funktionalität, Meßgenauigkeit und Gestehungskosten von Radarsensoren hängen dabei wesentlich vom angewandten Modulationsverfahren und der zugehörigen Radar-Signalverarbeitung ab. Die entsprechenden Randbedingungen bestimmen die Auslegung der Komponenten einer Radar-Sensorvorrichtung und damit beispielsweise die Aufwendigkeit oder Einfachheit der dabei eingesetzten Elektronik.

Zum Stand der Technik ist festzuhalten, daß die berührungslose Abstands- und Geschwindigkeitsmessung mit Radar seit vielen Jahren vornehmlich in der Militärtechnik praktiziert wird. Zur Abstandsmessung sind in diesem Zusammenhang zwei unterschiedliche Standard-Modulationsverfahren bekannt, nämlich die Pulsmodulation und die Frequenzmodulation.

Beim Pulslauf zeitverfahren wird ein kurzer Radarpuls in Richtung Meßobjekt ausgesendet und nach einer bestimmten Laufzeit als von einem Objekt reflektierter Puls wieder empfangen. Die Laufzeit des Radarpulses ist direkt proportional zu dem Abstand zum Meßobjekt.

Beim Frequenzverfahren wird ein frequenzmoduliertes Radarsignal ausgesendet, das phasen- bzw. frequenzverschoben empfangen wird. Die gemessene Phasen- bzw. Frequenzdifferenz, die typischerweise im KHz-Bereich liegt, ist proportional zum Objektabstand. Voraussetzung hierfür ist eine zeitlich lineare Frequenzmodulation.

Theoretisch sind die durch das Pulslaufzeit-Verfahren einerseits und das Frequenzverfahren andererseits erhaltenen Meßwerte gleichwertig. In der Praxis besitzen die Verfahren jedoch spezifische Vor- und Nachteile bezüglich der für die Praxis relevanten Parameter für die Sensor-Meßgenauigkeit bzw. die erreichbare Strukturauflösung. Bei diesen Parametern handelt es sich in erster Linie um die Modulationsbandbreite und die Radar-Sende-/Empfangsleistung. Für diese Parameter, die die Strukturauflösung und Reichweite bestimmen, existieren funktechnische Zulassungsvorschriften sowie technisch und wirtschaftlich relevante Randbedingungen, insbesondere hinsichtlich der Funktion und des Schaltungsaufwandes. Als Beispiel sind in diesem Zusammenhang die für die Nahbereichsüberwachung mit Hilfe von Radar-Sensoren verwendbaren Frequenzbereiche von 24,0 bis 24,25, 61,0 bis 61,5 und 76,0 bis 77,0 GHz zu nennen, auf die sich auch die im folgenden erwähnten Radarparameter beziehen.

Für den Anwendungsfall der Abstands- und Geschwindigkeitsmessungen von Objekten im Umfeld eines Kraftfahrzeuges wird eine physikalische Strukturauflösung von < 15 cm für einen Meßbereich von 0 bis 5 Metern gefordert (Nahbereich). Dafür ist eine Modulations-Bandbreite von > 1 GHz erforderlich. Bei einem entsprechenden Pulsverfahren ist eine Pulsdauer von < 1 ns notwendig. Die Erzeugung der vorstehenden Radar-Signale mit einer Dauer von einigen 100 ps, einer Bandbreite > 1 GHz und einer Radar-Mittenfrequenz bei z.B. 24 oder 77 GHz verursacht einen nicht unerheblichen technischen Aufwand.

Bekannte Radar-Sensorvorrichtungen für industrielle Anwendungen - z. B. ein Füllstands-Radar - und verkehrstechnische Anwendungen - z. B. ein Kraftfahrzeug-Abstand-Radar - verwenden aus Kostengründen vornehmlich frequenzmodulierte Verfahren, da dabei eine flexible und sehr präzise digitale Signalverarbeitung möglich ist. Ferner wird selbst für Objekte mit geringer Reflektivität eine hohe Reichweite bis ca. 100 m erzielt.

Aus der US 5,325,097 A ist ein Radarsysteme für Straßenfahrzeuge bekannt, das zwischen gefährlichen und nicht-gefährlichen Zielobjekten innerhalb einer vorbestimmten Zone unterscheidet. Dieses System verwendet ein Paar von frequenzmodulierten Dauerstrich-Radarzyklen und einen einzelnen Dauerstrich-Zyklus bei der Erzeugung von Radarsignalen zum Messen des Zielbereiches und der scheinbaren Zielgeschwindigkeit. Gemessene Werte aus den FM-CW- und CW-Zyklen werden mit vorbestimmten Werten zur Unterscheidung zwischen gefährlichen und nicht-gefährlichen Zielobjekten herangezogen. Bezüglich seines Aufbaus weist das aus der US 5,325,097 A bekannte System einen mittels einer Modulationsfunktion elektronisch ansteuerbaren, frequenzverstimmbaren Oszillator zur Erzeugung eines Sendesignals, ein Sendeantenne zur Aussendung des Sendesignals, eine Empfangsantenne zur Aufnahme des vom Ziel reflektierten Radarempfangssignales, eine Demodulationseinheit zur Bildung eines demodulierten Empfangsmeßsignals und eine Steuereinheit in Form eines digitalen Prozessors auf, die zur Steuerung der Sensoreinrichtung und vor allem des Modulators und zur Auswertung des Empfangssignals dient.

Aus der DE 38 30 992 C2 ist ein Radar-Höhenmesser bekannt, der nach dem FM-CW-Prinzip aufgebaut ist. Der Sendezweig des dabei verwendeten Radargerätes ist in der Leistung durch ein einem Leistungsverstärker vorgeschaltetes, variables Dämpfungsglied regulierbar, und zwar in Abhängigkeit der Höhe und insbesondere Flughöhe des mit dem Radar-Höhenmesser ausgerüsteten Flugzeuges. Offensichtlich soll das Radargerät immer mit einer möglichst geringen Radarenergie betrieben werden, um die Drehtierbarkeit durch Fremdsensoren so gering wie möglich zu halten, was insbesondere bei militärischen Anwendungen von Bedeutung ist.

Trotz ihrer praktischen Anwendbarkeit sind die bekannten und oben erörterten Radar- Sensorvorrichtungen auf der Basis eines Puls- oder Frequenzverfahrens für die im Zusammenhang mit der vorliegenden Erfindung interessierenden Detektionsaufgaben im Nahbereich aus verschiedenen Gründen ungeeignet. Bei dieser Anwendung ergeben sich nämlich stark unterschiedliche Meßanforderungen, wie nahe und ferne Ziele, geringe und hohe Objektgeschwindigkeiten und verschiedene Objektreflektivitäten. Diese Meßanforderungen müssen gleichzeitig erfüllt werden.

Aus der DE 195 38 309 A ist eine Radar-Sensorvorrivhtung zur Messung von Abständen und Relativgeschwindigkeiten zwischen einem Fahrzeug und einem oder mehreren Hindernissen weist einen Oszillator zur Erzuegung eines Sendesignals auf , dessen Frequenz mittels einer Steuer-Modulationsspannung verändert werden kann. Über eine Sende- und Empfangsantenne werden Radarsignale ausgesendet bzw. von einem zu erfassenden Objekt reflektierte Radarempfangssignale aufgenommen. Das Empfangssignal wird durch einen einkanaligen Mischer demoduliert und in einer Signalverarbeitungseinrichtung ausgewertet.

Bekannt ist grundsätzlich auch, den Erfassungsbereich von Radarsensoren durch Variation der Sendeleistung zu verändern (US 5 287 111).

Davon ausgehend liegt der Erfindung die Aufgabe zugrunde, eine Radar-Sensorvorrichtung anzugeben, die bei vertretbarem Schaltungsaufwand eine hohe Flexibilität und insbesondere gute Anwendbarkeit im Nahbereich zeigt.

Diese Aufgabe wird durch eine Radar-Sensorvorrichtung mit den im Anspruch 1 angegebenen Merkmalen gelöst. Demnach kommt bei der erfindungsgemäßen Radar-Sensorvorrichtung, die durch eine von einer Steuereinheit vorgenommene variable Einstellung einer Modulations- und Leistungssteuerfunktion alternierend in mindestens zwei unterschiedlichen, sich überlagernden Betriebsarten zu betreiben ist, ein kombiniertes und flexibles Modulationsverfahren zur Anwendung. Dabei wird mit der genannten Modulationsfunktion ein elektronisch ansteuerbarer, frequenzverstimmbarer Oszillator zur Erzeugung eines Sendesignals für eine Sendeantenne angesteuert. Die Leistungssteuerfunktion steuert einen Leistungsschalter, der zwischen Oszillator und Sensorantenne zur Variation der Sendeleistung gesetzt ist. Das von der Empfangsantenne erzeugte RadarEmpfangssignal wird zusammen mit dem Sendesignal in einer Demodulationseinheit zur Bildung eines demodulierten Empfangsmeßsignales kombiniert. Letzteres kann von der eingangs genannten Steuereinheit ausgewertet werden. Letztere dient gleichzeitig zur Steuerung der gesamten Sensorvorrichtung, wobei die Frequenz und Phase des Oszillators durch eine diesem zugeordnete Referenzeinheit von der Steuereinheit überwacht werden kann.

Durch diese Grundauslegung der Radar-Sensorvorrichtung können die Radarparameter "Bandbreite" und "Leistung" mittels der Steuereinheit in den beiden sich überlagernden Betriebsarten durch entsprechende Ansteuerung des Leistungsschalters und des Oszillators adaptiv eingestellt werden. Für die Abstandsmessung im Nahbereich wird mit einer frequenzmodulierten Betriebsart mit verminderter Sendeleistung, dafür aber höherer Bandbreite gearbeitet, der für die Geschwindigkeitsmessung sowohl im Nah- als auch Fernbereich eine Betriebsart mit Festfrequenzbetrieb und normaler Ausgangsleistung überlagert ist. Dabei ist zu ergänzen, daß durch die variable Ansteuerbarkeit des Leistungsschalters die Sendeleistung der Sensorvorrichtung entsprechend der aktuell gegebenen Reflektivität der erfaßten Objekte variiert werden kann. Dadurch wird eine Übersteuerung der Empfangselemente vermieden. Der Dynamikbereich der Sensorvorrichtung kann also situationsbezogen optimal adaptiv eingestellt werden.

Bevorzugte Ausführungsformen der erfindungsgemäßen Sensorvorrichtung sind im übrigen in den Unteransprüchen angegeben.

Im folgenden wird die Erfindung in verschiedenen Ausführungsbeispielen anhand der beigefügten Zeichnungen näher erläutert. Es zeigen:
- Fig. 1: ein Blockschaltbild einer Radar-Sensorvorrichtung in einer ersten Ausführungsform,
- Fig. 2: ein Kurvendiagramm zur Darstellung der frequenzabhängigen Sendeleistung im sogenannten "Dual-Mode-Betrieb",
- Fig. 3: zwei synchron übereinandergelegte Kurvendiagramme zur Darstellung des zeitlichen Verlaufes der Modulationsund Leistungssteuerfunktion,
- Fig. 4: zwei Kurvendiagramme analog Fig. 3 mit einer einen Taktbetrieb erzeugenden Leistungssteuerfunktion und
- Fig. 5: ein Blockschaltbild einer Radar-Sensorvorrichtung in einer zweiten Ausführungsform.

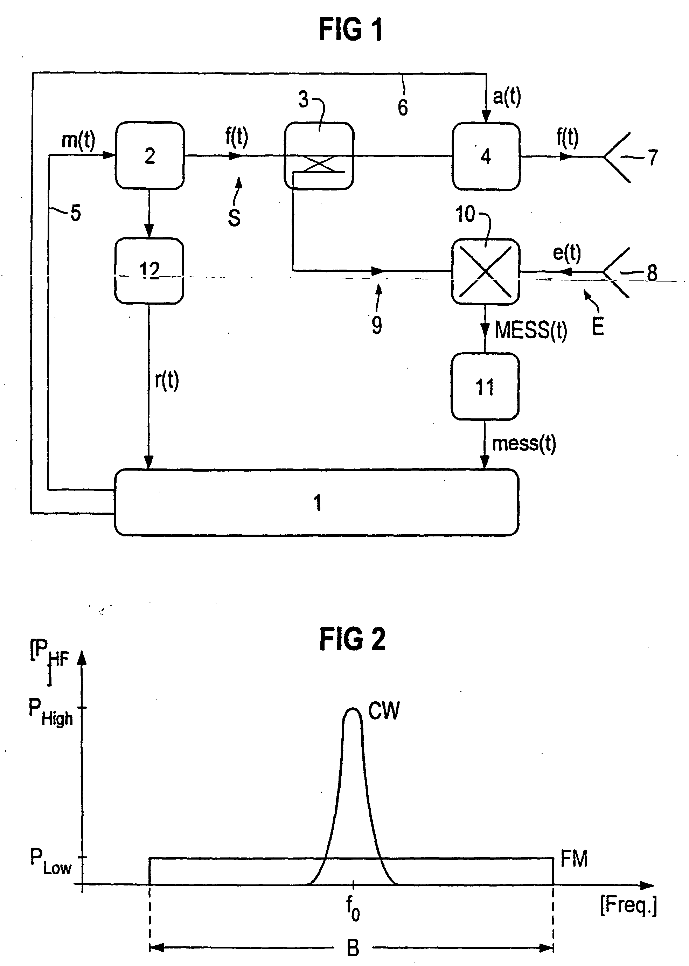

Die in Fig. 1 gezeigte Radar-Sensorvorrichtung weist eine zentrale Steuereinheit 1 zur Steuerung der gesamten Elektronik der Sensorvorrichtung und zur Meßwert-Auswertung auf. Diese Steuereinheit 1 wird in grundsätzlich bekannter Weise mit einem Mikroprozessor betrieben, der die üblichen, internen Komponenten und Schnittstellen aufweist. Durch eine entsprechende Steuersoftware werden die Funktionen der Steuereinheit 1 implementiert.

Im Sendezweig S ist ein elektronisch frequenzverstimmbarer 24-GHz-Oszillator 2 vorgesehen, der ein frequenzmodulierbares Sendesignal f(t) erzeugt. Dem Oszillator 2 ist ein Leistungsteiler 3 nachgeschaltet, der einen Teil des Sendesignals f(t) zum Empfangszweig E der Sensorvorrichtung abzweigt. Der im Sendezweig S durchgehende Teil des Sendesignal f(t) gelangt zu dem Leistungsschalter 4, der als schaltbarer HF-Verstärker oder im einfachsten Fall als HF-Transistor ausgelegt sein kann.

Der Oszillator 2 und der Leistungsschalter 4 stehen über entsprechende Verbindungsleitungen 5, 6 mit der Steuereinheit 1 in Verbindung. Über die Verbindungsleitung 5 wird eine Modulationsfunktion m(t), die von der Steuereinheit 1 erzeugt wird, dem Oszillator 2 zugeführt. Desgleichen wird über die Verbindungsleitung 6 dem Leistungsschalter 4 von der Steuereinheit 1 eine Steuerfunktion a(t) übermittelt. Durch die Modulationsfunktion m(t) wird die Frequenz des vom Oszillator 2 abgegebenen Sendesignals f(t) gesteuert, während durch die Steuerfunktion a(t) die von der Sensorvorrichtung über eine Sendeantenne 7 abgestrahlte Leistung eingestellt wird.

Der Empfangszweig E weist eine Empfangsantenne 8 zur Aufnahme eines von einem zu erfassenden Objekt reflektierten RadarErnpfangssignals e(t) auf. Dieser Empfangsantenne 8 ist eine Demodulationseinheit 9 zugeordnet, die bei dem in Fig. 1 gezeigten Ausführungsbeispiel durch den Leistungsteiler 3 und den zwischen Leistungsteiler 3 und Empfangsantenne 8 gesetzten Empfangsmischer 10 gebildet ist. Der Empfangsmischer 10 bildet aus dem Empfangssignal e(t) und dem Sendesignal f(t) ein demoduliertes Meßsignal MESS(t), das über eine Abtastund Speichereinheit 11 (= "Sample-and-hold"-Einheit) dem Auswerteteil der Steuereinheit 1 zugeführt wird. Die Abtast- und Speichereinheit 11 bildet dabei aus dem getakteten Meßsignal MESS(t) ein kontinuierliches Meßsignal mess(t). Die Abtastund Speichereinheit 11 kann im übrigen Bestandteil der Steuereinheit 1 selbst sein.

Schließlich ist in der Sensorvorrichtung noch eine Referenzeinheit 12 vorgesehen, die dem Oszillator 2 zugeordnet ist und die Aufgabe besitzt, ein Referenzsignal r(t) zu erzeugen, mit dessen Hilfe die Frequenz und Phase des Oszillators 2 von der Steuereinheit 1 überwachbar ist.

Die vorstehend erörterte Radar-Sensorvorrichtung kann aufgrund ihres Aufbaues in typischer Weise in einem sogenannten "Dual-Mode-Betrieb" gefahren werden, d.h. daß der Radarsensor wechselnd in mindestens zwei Betriebsarten (= "Dual-Mode") betrieben wird. In alternierend getakteter Abfolge wird ein monofrequentes Trägersignal (CW-Betriebsart) und ein frequenzmoduliertes Signal (FM-Betriebsart) ausgesendet. In der CW-Betriebsart wird per Doppler-Effekt die Geschwindigkeit vorzugsweise schnell bewegter, ferner Objekte mit möglichst hoher Geschwindigkeitsauflösung und Reichweite gemessen, wohingegen in der FM-Betriebsart der Abstand zu nahen Objekten mit möglichst hoher Abstandsauflösung gemessen werden soll.

Diese sich in beiden Betriebsarten ergebenden Meßsignale werden spektral ausgewertet, was z.B. durch Fouriertransformation, aber auch alternative Spektralanalysemethoden, wie beispielsweise autoregressive Verfahren vorgenommen wird. Dabei werden die Radarparameter "Bandbreite" und "Leistung" wie erwähnt durch die Steuereinheit 1 in der jeweiligen Betriebsart durch entsprechende Ansteuerung der Leistungsschalters 4 und des Oszillators 2 adaptiv eingestellt. Dadurch ergibt sich im Dual-Mode-Betrieb typischerweise das in Fig. 2 dargestellte Frequenzspektrum: In der FM-Betriebsart wird mit hoher Bandbreite B um die Mittenfrequenz f₀ und mit niedrigem Lei-Stungspegel P_{LOW} gearbeitet. Durch diese Wahl der Radarparameter wird im Nahbereich die Priorität auf eine hohe Auflösung bei der Distanzmessung gelegt.

In der CW-Betriebsart wird nur eine geringe Bandbreite um die Mittenfrequenz f₀ belegt, jedoch mit einem hohen Leistungspegel P_{HIGH} gearbeitet. Dadurch wird eine hohe Reichweite und Geschwindigkeitsauflösung der Sensorvorrichtung erreicht.

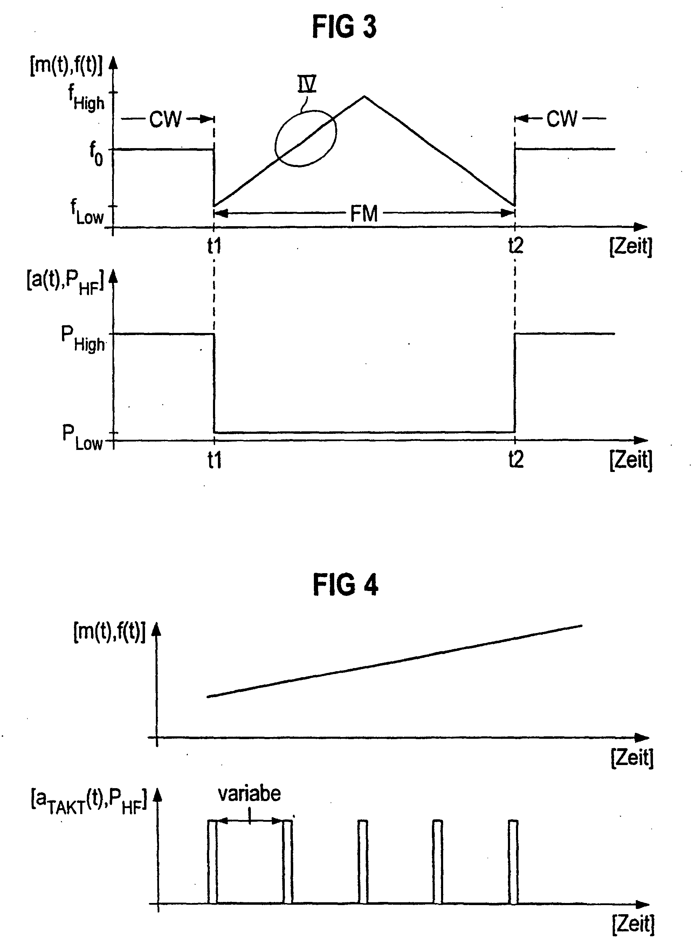

Das vorstehend beschriebene Frequenzspektrum im Dual-Mode-Betrieb wird durch eine entsprechende Ansteuerung von Oszillator 2 und Leistungsschalter 4 mit Hilfe der von der Steuereinheit 1 abgegebenen Modulationsfunktion m(t) und der Steuerfunktion a(t) erreicht. Dies ist in Fig. 3 näher dargestellt. In den beiden synchron übereinandergelegten Zeitdiagrammen ist im oberen Diagramm die Modulationsfunktion m(t) bzw. das sich daraus ergebende Sendesignal f(t) im Frequenzverhalten dargestellt. Das. untere Diagramm zeigt die Steuerfunktion a(t) bzw. die damit über den Leistungsschalter 4 gesteuerte Radarleistung P_{HF}.

Wie aus dem Diagramm erkennbar ist, ist in der CW-Betriebsart die Modulationsfunktion m(t) konstant, was eine konstante Radarfrequenz f₀ ergibt. Die Steuerfunktion a(t) schaltet zwischen den beiden Radarleistungspegeln P_{LOW} und P_{HIGH} um, wobei in der CW-Betriebart der Leistungspegel P_{HIGH} vorzugsweise konstant eingestellt ist.

Zum Zeitpunkt t1 erfolgt das Umschalten in die FM-Betriebsart, bei der die Modulationsfunktion m(t) in Form einer ansteigenden und abfallenden Rampe verläuft, so daß die Frequenz des Sendesignal f(t) zwischen der unteren Grenzfrequenz f_{LOW} und der oberen Grenzfrequenz f_{HIGH} hin- und herläuft. Aus dem unteren Teil der Fig. 3 ist erkennbar, daß aufgrund der Steuerfunktion a(t) der Radarleistungspegel P_{HF} von hohem Niveau P_{HIGH} auf niedriges Niveau P_{LOW} umgeschaltet wird.

Zum Zeitpunkt t2 wird wieder in den CW-Betrieb umgeschaltet.

In Fig. 3 ist die Modulationsfunktion m(t) im FM-Betrieb als linear ansteigende und abfallende Rampe gezeigt. Die üblicherweise nicht lineare Frequenz-Spannungs-Kennlinie des Oszillators 2 kann in der Praxis durch eine Vorverzerrung der Modulationsfunktion m(t) berücksichtigt werden. Dies kann durch eine Softwarekorrektur im Steuerprogramm der Steuereinheit 1 oder durch einen analogen/digitalen Regelkreis erfolgen.

Schließlich ist noch darauf hinzuweisen, daß die Steuerfunktion a(t) bei Auslegung des Leistungsschalters 4 als HF-Transistor durch ein Ein- und Ausschalten der Betriebsspannung des Transistors implementiert werden kann. Die Verwendung eines HF-Transistors hat zudem den Vorteil, daß eine Durchlässigkeit des Leistungsschalters 4 in Rückwärtsrichtung, also von der Sendeantenne 7 zum Leistungsteiler 3, in beiden Schaltzuständen nicht gegeben ist, wodurch sich die Isolation von Sende- f(t) und Empfangssignal e(t) erhöhen läßt.

Die Schaltrate zwischen CW- und FM-Betriebsart wird situationsbezogen variiert und liegt anwendungsspezifisch im Hz bis kHz-Bereich.

Eine alternative Auslegung der Steuerfunktion a(t) ist in den Diagrammen gemäß Fig. 4 dargestellt. Die Zeitachse ist dabei gegenüber der Darstellung in Fig. 3 erheblich gedehnt. So entspricht die von Fig. 4 abgedeckte Zeitdauer dem mit IV in Fig. 3 bezeichneten, oval umgrenzten Bereich. Wie nun aus dem unteren Diagramm in Fig. 4 erkennbar ist, wird der Leistungsschalter 4 mit einem schnellen Taktsignal a_{Takt}(t)angesteuert, über dessen Tastverhältnis sich die mittlere Radarleistung einstellen läßt. Ähnlich einem Impulsradar werden also kurze Meßpulse ausgesendet. Je kürzer die Meßpulse sind, desto geringer ist die ausgesendete mittlere Radarleistung und desto geringer die Sensorreichweite. Auf der Empfangsseite ergibt sich ein getaktetes Meßsignal MESS(t). Durch den Vergleich mit der Modulationsfunktion m(t) folgt, daß die ausgesendete Radarfrequenz verglichen zur Taktrate sich langsam verändert, wodurch praktisch für jede Radarfrequenz mehrere Meßpulse ausgesendet und die entsprechenden Empfangssignale ausgewertet werden können.

Ein wesentlicher Unterschied zum konventionellen Pulsradar besteht jedoch darin, daß die Pulsdauer deutlich höher als die Laufzeit der Radarmeßpulse ist. Da die Strukturauflösung bei der Distanzmessung jedoch nicht durch die Pulsdauer bestimmt wird, sondern durch die Frequenzmodulationsbandbreite, ist es nicht erforderlich, besonders kurze Pulse zu erzeugen. Dadurch werden die technischen Anforderungen und die Kosten für die Radar-Sensorvorrichtung reduziert.

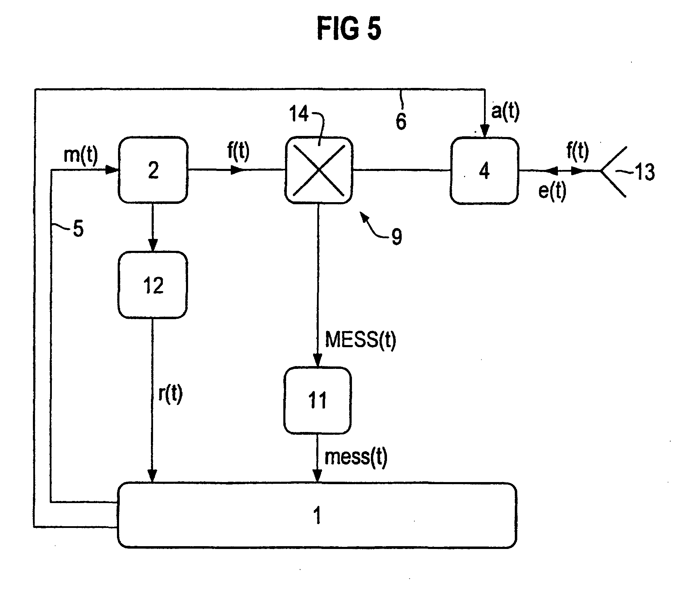

In Fig. 5 ist eine zweite Ausführungsform der Radar-Sensorvorrichtung dargestellt, bei der statt getrennter Sensor- und Empfangsantennen eine kombinierte Sende-/Empfangsantenie 13 verwendet wird. Bei einer solchen monostatischen Anordnung wird als Demodulationseinheit 9 ein bidirektionaler Mischer 14 zwischen Oszillator 2 und Leistungsschalter 4 eingesetzt. Bei dem bidirektionalen Mischer 14 kann es sich beispielsweise um eine Schottky-Diode handeln. Dieser bidirektionale Mischer 14 überträgt einen Teil des Sendesignals f(t)zum Leistungsschalter 4 und weiter zur Antenne 13 und bildet aus dem reflektierten Radarempfangssignal e(t) und dem Sendesignal f(t) ein demoduliertes Meßsignal MESS(t). Der Leistungsschalter 4 wird wiederum durch die Steuerfunktion a(t) gesteuert und ist ein Element, das in einem ersten Schaltzustand bidirektional durchlässig ist, in einem zweiten Schaltzustand jedoch bidirektional sperrt.

Die weiteren Bauteile der Sensorvorrichtung gemäß Fig. 5 stimmen mit denen gemäß Fig. 1 überein und sind mit identischen Bezugszeichen versehen. Insoweit kann auf die Beschreibung der Fig. 1 verwiesen werden.

## Patentansprüche

1. Radar-Sensorvorrichtung zur Erfassung des Abstandes und/oder der Geschwindigkeit eines Objektes relativ zur Sensorvorrichtung mit
- einem mittels einer Modulationsfunktion (m(t)) elektronisch ansteuerbaren, frequenzverstiambaren Oszillator (2) zur Erzeugung eines Sendesignals (f(t)),
- einer Sendeantenne (7, 13) zur Aussendung eines Radarsignals auf der Basis des Sendesignals (f(t))
- einer Empfangsantenne (8, 13) zur Aufnahme des vom zu erfassenden Objekt reflektierten Radarempfangssignals (e(t)),
- einer Demodulationseinheit (9) zur Bildung eines demodulierten Empfangsmeßsignals (MESS(t)) aus dem Sendesignal (f(t)) und dem Radarempfangssignal (e(t)),
- einer Steuereinheit (1) zur Steuerung der Sensorvorrichtung und zur Auswertung des Empfangsmeßsignals (MESS(t)),
**gekennzeichnet durch**
- einen zwischen Oszillator (2) und der Sendeantenne (7,13) gesetzten, durch eine Leistungssteuerfunktion (a(t)) ansteuerbaren Leistungsschalter (4) zur Variation der Sendeleistung (P_{HF}) der Sendeantenne (7, 13), und
- eine dem Oszillator (2) zugeordnete Referenzeinheit (12) zur Erzeugung eines Referenzsignals (r(t)) zur Überwachung der Frequenz und Phase des Oszillators (2),
wobei die Sensorvorrichtung durch eine von der Steuereinheit (1) vorgenommene variable Einstellung der Modulationsund Leistungssteuerfunktion (m(t), a(t)) alternierend in mindestens zwei unterschiedlichen, sich überlagernden Betriebsarten (CW, FM) zu betreiben ist, die auf unterschiedliche Meßbereiche der Steuervorrichtung abgestimmt sind.

2. Radar-Sensorvorrichtung nach Anspruch 1, **dadurch gekennzeichnet**,daß in alternierend getakteter Abfolge in einer CW-Betriebsart ein monofrequentes Sendesignal (f) und in einer FM-Betriebsart ein frequenzmoduliertes Sendesignal (f(t)) erzeugbar sind.

3. Radar-Sensorvorrichtung nach Anspruch 2, **dadurch gekennzeichnet**, daß durch adaptive Ansteuerung des Oszillators (2) und des Leistungsschalters (4) über eine entsprechende Einstellung der Modulations- und Leistungssteuerfunktion (m(t), a(t)) durch die Steuereinheit (1)
- zur Abstandserfassung von Objekten in einem Nahbereich im FM-Betrieb mit reduzierter Sendeleistung (P_{LOW}) bei erhöhter Bandbreite (B) der Modulationsfrequenz (f(t)) gearbeitet wird, und
- zur Geschwindigkeitserfassung von Objekten zumindest in einem Fernbereich im CW-Betrieb mit nicht reduzierter Sendeleistung (P_{HIGH}) bei einer festen Frequenz (f) gearbeitet wird.

4. Radar-Sensorvorrichtung nach Anspruch 2 oder 3, **dadurch gekennzeichnet,** daß die Modulationsfunktion (m(t)) im FM-Betrieb rampenförmig und im CW-Betrieb konstant ausgelegt ist.

5. Radar-Sensorvorrichtung nach einem der Ansprüche 2 bis 4, **dadurch gekennzeichnet,** daß die Leistungssteuerfunktion (a(t)) als zwischen zwei RadarLeistungspegeln (P_{LOW}, P_{HIGH}) hin und her schaltende Amplitudenschaltfunktion (a(t)) ausgelegt ist.

6. Radar-Sensorvorrichtung nach Anspruch 5, **gekennzeichnet** durch eine Amplitudenschaltfunktion (a(t)) mit einer gegenüber der Modulationsrate der Modulationsfunktion (m (t)) schnelleren Taktrate.

7. Radar-Sensorvorrichtung nach einem der Ansprüche 1 bis 6, **dadurch gekennzeichnet,** daß bei getrennter Sende- und Empfangsantenne (7, 8) die Demodulationseinheit (9) gebildet ist durch
- einen Leistungsteiler (3) im Sendezweig (S) zur Abtrennung eines Teils des Sendesignals (f(t)) und
- einen der Empfangsantenne (8)zugeordneten Empfangsmischer (10), dem zur Bildung des demodulierten Empfangssignals (MESS(t)) zum einen der abgetrennte Teil des Sendesignals (f(t)) und zum anderen das Empfangssignal (e(t)) von der Empfangsantenne (8) zuführbar ist.

8. Radar-Sensorvorrichtung nach einem der Ansprüche 1 bis 6, **dadurch gekennzeichnet,** daß bei kombinierter Sende-/Empfangsantenne (13) die Demodulationseinheit (9) durch einen bidirektionalen Mischer (14) im Sendezweig (S) gebildet ist.

9. Radar-Sensorvorrichtung nach einem der Ansprüche 1 bis 8, **dadurch gekennzeichnet,** daß der Leistungsschalter (4) von einem schaltbaren Hochfrequenz-Verstärker, insbesondere einem Hochfrequenz-Transistor gebildet ist.

10. Radar-Sensorvorrichtung nach einem der Ansprüche 1 bis 9, **dadurch gekennzeichnet,** daß der Demodulationseinheit (9) eine Abtast- und Speichereinheit (11) nachgeschaltet ist, die vorzugsweise in einem zeitsynchronen Verhältnis zur getakteten Leistungsschaltfunktion (a(t)) betrieben wird.

## Claims

1. Radar sensor device for detecting the distance and/or the velocity of an object relative to the sensor device, with
- a frequency-tuneable oscillator (2) which can be actuated electronically by means of a modulation function (m(t)) to generate a transmission signal (f(t)),
- a transmission antenna (7, 13) for emitting a radar signal on the basis of the transmission signal (f(t)),
- a receiving antenna (8, 13) to pick up the radar reception signal (e(t)) reflected by the object which is to be detected,
- a demodulation unit (9) to form a demodulated reception measurement signal (MESS(t)) from the transmission signal (f(t)) and the radar reception signal (e(t)),
- a control unit (1) to control the sensor device and to analyse the reception measurement signal (MESS(t)),
**characterised in that**
- a power switch (4) which is placed between the oscillator (2) and the transmission antenna (7, 13) and can be actuated by a power control function (a(t)), to vary the transmission power (P_{HF}) of the transmission antenna (7, 13), and
- a reference unit (12) allocated to the oscillator (2), to generate a reference signal (r(t)) for monitoring the frequency and phase of the oscillator (2),
where the sensor device can be operated alternately in at least two different, overlapping operating modes (CW, FM) which are matched to different measuring ranges of the control device, by means of a variable adjustment of the modulation and power control functions (m(t) and a(t)) by the control unit (1).

2. Radar sensor device in accordance with Claim 1, **characterised in that** in alternately clocked sequence a monofrequent transmission signal (f) can be generated in a CW operating mode, and a frequency modulated signal (f(t)) can be generated in an FM operating mode.

3. Radar sensor device in accordance with Claim 2, in that through adaptive actuating of the oscillator (2) and of the power switch (4) by means of a corresponding adjustment of the modulation and power control functions (m(t), a(t)) by the control unit (1),
- to detect the distance of objects in a close-up range the system is used in FM mode with reduced transmission power (P_{LOW}) at increased bandwidth (B) of the modulation frequency (f(t)), and
- to detect the velocity of objects in at least one distant range the system is used in CW mode with non-reduced transmission power (P_{HIGH}) at a fixed frequency (f).

4. Radar sensor device in accordance with Claim 2 or 3, **characterised in that** the modulation function (m(t)) is of ramp-shaped design in the FM mode and is constant in the CW mode.

5. Radar sensor device in accordance with one of the claims 2 to 4, **characterised in that** the power control function (a(t)) is designed as an amplitude switching function (a(t)) which switches back and forth between two radar power levels (P_{LOW}, P_{HIGH}).

6. Radar sensor device in accordance with Claim 5, characterised by an amplitude switching function (a(t)) with a faster clock rate than the modulation rate of the modulation function (m(t)).

7. Radar sensor device in accordance with one of the claims 1 to 6, **characterised in that** with separate transmission and reception antennas (7, 8) the demodulation unit (9) is constituted by
- a power splitter (3) in the transmission branch (S) to separate a portion of the transmission signal (f(t)) and
- a reception mixer (10) allocated to the reception antenna (8), to which on the one hand the separated portion of the transmission signal (f(t)) and on the other hand the reception signal (e(t)) can be conducted from the receiving antenna (8) in order to form the demodulation reception signal (MESS(t)).

8. Radar sensor device in accordance with one of the claims 1 to 6, **characterised in that** when a combined transmission/reception antenna (13) is used, the demodulation unit (9) consists of a bi-directional mixer (14) in the transmission branch (S).

9. Radar sensor device in accordance with one of the claims 1 to 8, **characterised in that** the power switch (4) is constituted of a switchable high frequency amplifier, especially a high frequency transistor.

10. Radar sensor device in accordance with one of the claims 1 to 9, **characterised in that** the demodulation unit (9) is connected down-line from a sample-and-hold unit (11), which is preferably operated in a time-synchronous relationship to the clocked power switch function (a(t)).

## Revendications

1. Dispositif détecteur radar destiné à la détection de la distance et/ou de la vitesse d'un objet par rapport au dispositif détecteur, comprenant
- un oscillateur (2) réglable en fréquence, pouvant être piloté électroniquement au moyen d'une fonction de modulation (m(t)), et destiné à la production d'un signal d'émission (f(t)),
- une antenne d'émission (7, 13) destinée à l'émission d'un signal radar sur la base du signal d'émission (f(t)),
- une antenne de réception (8, 13) destinée à la réception du signal de réception (e(t)) réfléchi par l'objet à détecter,
- une unité de démodulation (9) destinée à la formation d'un signal de mesure de réception démodulé (MESS(t)) à partir du signal d'émission (f(t)) et du signal de réception radar (e(t)),
- une unité de commande (1) destinée à la commande du dispositif détecteur et à l'analyse du signal de mesure de réception (MESS(t)),
caractérisé par
- un commutateur de puissance (4) interposé entre l'oscillateur (2) et l'antenne d'émission (7, 13), piloté par une fonction de commande de la puissance (a(t)), et destiné à faire varier la puissance d'émission (P_{HF}) de l'antenne d'émission (7, 13), et
- une unité de référence (12) associée à l'oscillateur (2), destinée à la production d'un signal de référence (r(t)) servant pour la surveillance de la fréquence et de la phase de l'oscillateur (2),
le dispositif détecteur devant fonctionner alternativement, sous l'action d'un réglage variable, exécuté par l'unité de commande (1), d'une fonction de commande de la puissance (m(t), a(t)), dans au moins deux différents modes de fonctionnement (CW, FM) qui se superposent, et qui sont accordés sur différents domaines de mesure du dispositif détecteur.

2. Dispositif détecteur radar selon la revendication 1, **caractérisé en ce qu**'un signal d'émission à fréquence unique peut être produit dans un mode de fonctionnement CW et un signal d'émission modulé en fréquence (f(t)) peut être produit dans un mode de fonctionnement FM dans une succession cyclique en alternance.

3. Dispositif détecteur radar selon la revendication 2, **caractérisé en ce que**, par un pilotage adaptatif de l'oscillateur (2) et du commutateur de puissance (4), effectué par un réglage approprié de la fonction de modulation et de la commande de la puissance (m(t), a(t)) exécuté par l'unité de commande (1),
- pour la détection de la distance d'objets dans une zone proche, on travaille dans le fonctionnement FM avec une puissance d'émission réduite (P_{LOW}) avec une largeur de bande (B) agrandie de la fréquence (f(t)) de la modulation, et
- pour la détection de la vitesse d'objets situés au moins dans un zone lointaine, on travaille dans le fonctionnement CW avec une puissance d'émission non réduite (P_{HIGH}) à une fréquence fixe (f).

4. Dispositif détecteur radar selon la revendication 2 ou 3, **caractérisé en ce que** la fonction de modulation (m(t)) est réalisée en forme de rampe dans le fonctionnement FM et est constante dans le fonctionnement CW.

5. Dispositif détecteur radar selon l'une des revendications 2 à 4, **caractérisé en ce que** la fonction de commande de la puissance (a(t)) est réalisée sous la forme d'une fonction d'amplitude commutable (a(t)) qui peut basculer entre deux niveaux de puissance (P_{LOW}, P_{HIGH}).

6. Dispositif détecteur radar selon la revendication 5, caractérisé par une fonction d'amplitude commutable (a(t)) possédant une cadence de cycle plus rapide que la vitesse de modulation de la fonction de modulation (m(t)).

7. Dispositif détecteur radar selon l'une des revendications 1 à 6, **caractérisé en ce que** , dans le cas d'antennes d'émission et de réception (7, 8) séparées, l'unité de démodulation (9) est composée
- d'un diviseur de puissance (3) placé dans la branche d'émission (S) pour la séparation d'une partie du signal d'émission (f(t)) et
- d'un mélangeur de réception (10) associé à l'antenne de réception (8) et auquel peuvent être envoyés, pour la formation du signal de réception démodulé (MESS(t)), d'une part, la partie du signal d'émission (f(t)) qui a été séparée et, d'autre part, le signal de réception (e(t)) de l'antenne de réception.

8. Dispositif détecteur radar selon l'une des revendications 1 à 6, **caractérisé en ce que**, dans le cas d'une antenne d'émission/réception combinée (13), l'unité de démodulation (9) est formée d'un mélangeur bidirectionnel (14) placé dans la branche d'émission.

9. Dispositif détecteur radar selon l'une des revendications 1 à 8, **caractérisé en ce que** le commutateur de puissance (4) est formé d'un amplificateur à haute fréquence commutable, en particulier d'un transistor à haute fréquence.

10. Dispositif détecteur radar selon l'une des revendications 1 à 9, **caractérisé en ce qu**'en aval de l'unité de démodulation (9) est placée une unité d'échantillonnage et de maintien (11) qui est de préférence activée dans un rapport de synchronisme par rapport à la fonction de commutation de la puissance cadencée cycliquement (a(t)).
